# FASCICULE DE BREVET EUROPEEN

(11) **EP 2 037 783 B1**
(45) Date de publication et mention de la délivrance du brevet: **01.09.2010**
(21) Numéro de dépôt: 07823258.4
(22) Date de dépôt: 06.07.2007
(51) Int. Cl.: A47J 36/02, G01K 7/18

(54) **ARTICLE CULINAIRE PERMETTANT LA DÉTECTION DE SA TEMPÉRATURE PAR UNE PLAQUE DE CUISSON**
NAHRUNGSMITTEL MIT MÖGLICHKEIT DER ERFASSUNG SEINER TEMPERATUR DURCH EINEN HERD
CULINARY ARTICLE ALLOWING ITS TEMPERATURE TO BE DETECTED BY A HOB

(30) Priorité: 06.07.2006 FR 0606176
(43) Date de publication de la demande: 25.03.2009
(73) Titulaire: SEB SA, 69130 Ecully (FR)
(72) Inventeur: BONNEL, Jocelyn, F-73100 Vions (FR); BURAIS, Noël, F-69100 Villeurbanne (FR)
(74) Mandataire: Somnier, Jean-Louis
(86) Numéro de dépôt international: PCT/FR2007/001160
(87) Numéro de publication internationale: WO 2008/003874

(56) Documents cités:
- EP-A2- 0 437 356
- DE-A1- 4 413 979
- DE-A1- 10 058 670
- JP-A- 5 344 926
- JP-A- 58 160 738
- JP-A- 60 238 913

## Description

La présente invention concerne le domaine des articles culinaires, notamment ceux permettant la détection de leur température par une plaque de cuisson. D'un point de vue général, il s'agit de déterminer la température d'un article culinaire de sorte à optimiser la cuisson d'un aliment, ou protéger l'ustensile de cuisson, et ce indépendamment de la taille de l'article.

Plus précisément, l'invention concerne un article culinaire comprenant un fond dans lequel sont disposés des moyens thermosensibles réalisés dans des matériaux conducteurs d'électricité.

Un tel article est bien connu de l'homme du métier, notamment par l'exemple qu'en donne le document de l'état de la technique antérieure JP 5344926. Ce document décrit un système de cuisson comprenant un article culinaire et une plaque de cuisson. L'article culinaire est équipé d'un moyen thermosensible, et d'une bobine secondaire formant un circuit fermé avec le moyen thermosensible. La plaque de cuisson est munie d'une bobine primaire, d'un moyen de génération de hautes fréquences induisant un courant dans la bobine secondaire, et d'un moyen de détection de la température qui détermine la température de l'article culinaire selon le niveau de courant circulant dans la bobine primaire.

L'inconvénient d'une telle configuration est qu'elle nécessite d'une part d'intégrer une bobine dans le récipient amovible, et d'autre part de positionner la bobine secondaire et le moyen thermosensible à l'intérieur d'un boîtier de protection au centre de la face supérieure du fond du récipient.

Il est également connu le document DE 4413979. Ce document divulgue un système de cuisson comprenant un article culinaire et une plaque de cuisson. L'article culinaire comprend en son fond un capteur coopérant avec un deuxième capteur situé dans ou sur la plaque de cuisson. Le capteur de l'article culinaire est essentiellement un capteur céramique multicouche dit « binaire » permettant de détecter l'atteinte de températures cibles par modification brutale de la constante diélectrique aux températures cibles. La plaque de cuisson comprend un ensemble de capteurs, ou d'électrodes, relié de manière capacitive au diélectrique du capteur situé dans le fond de l'article culinaire.

L'inconvénient d'une telle configuration est qu'elle est dédiée aux mesures capacitives et que la mesure de la température n'est pas fine à cause des contraintes des valeurs cibles.

Enfin, le document US 2005/0258168 divulgue une plaque pour griller des denrées-alimentaires. Cette plaque de cuisson à induction est munie d'un plateau sur lequel sont posées les denrées à griller, le plateau étant muni d'un matériau ferromagnétique pour la mesure de température.

L'inconvénient d'une telle configuration est qu'elle nécessite un arrangement stérique particulier pour le positionnement des moyens de chauffe inductifs et des moyens de mesure. En outre, elle nécessite deux bobines de mesure pour une bobine de chauffe.

La présente invention a pour but de remédier à ces inconvénients en proposant un dispositif simple, facile d'utilisation et d'entretien.

Ainsi, la température de l'article culinaire peut être mesurée précisément, étant donné que la résistivité varie de façon continue en fonction de la température et cette mesure est plus représentative de la température des aliments étant donné qu'elle se fait directement sur l'article culinaire et non sur la plaque de cuisson.

La mesure de la température peut être effectuée lors de la chauffe de l'article culinaire par des moyens de mesure déportés dans la plaque de cuisson sans contact avec l'article. Grâce au traitement direct par l'électronique de la plaque de cuisson, il n'est pas nécessaire d'introduire cette électronique (de mesure, de transmission...) dans une poignée de l'article culinaire ou de venir relier une sonde de température en contact avec l'article culinaire et l'électronique de la plaque. La régulation de la température de l'article culinaire ne fait intervenir aucune transmission de signal, par exemple telle qu'une communication par infrarouge ou radio, entre la plaque de cuisson et l'article.

Par ailleurs, les mesures de température effectuées sont des mesures discrètes dont la fréquence est avantageusement périodique et peut être choisie, voire modulée en fonction de la température ou du type de matériau non ferromagnétique.

Par ailleurs, l'article culinaire peut être utilisé sur tout type classique de moyens de chauffe (induction, radian, gaz, etc.), sans risque de détérioration des moyens thermosensibles.

D'autres caractéristiques et avantages de la présente invention apparaîtront plus clairement à la lecture de la description suivante donnée à titre d'exemple illustratif et non limitatif et faite en référence aux figures annexées dans lesquelles :
- la figure 1 représente une coupe transversale d'une partie d'un système de cuisson (en fonctionnement) comprenant un article culinaire conforme à un mode de réalisation de la présente invention et une plaque de cuisson, les moyens de chauffe de la plaque de cuisson étant en état de chauffage et les moyens de mesure étant en mode d'arrêt,
- la figure 2 est similaire à la figure 1, les moyens de chauffe étant en état d'arrêt et les moyens de mesure en mode d'induction, et
- la figure 3 représente le principe général de l'évolution de la tension dans les moyens de mesure et du courant dans les moyens de chauffe.

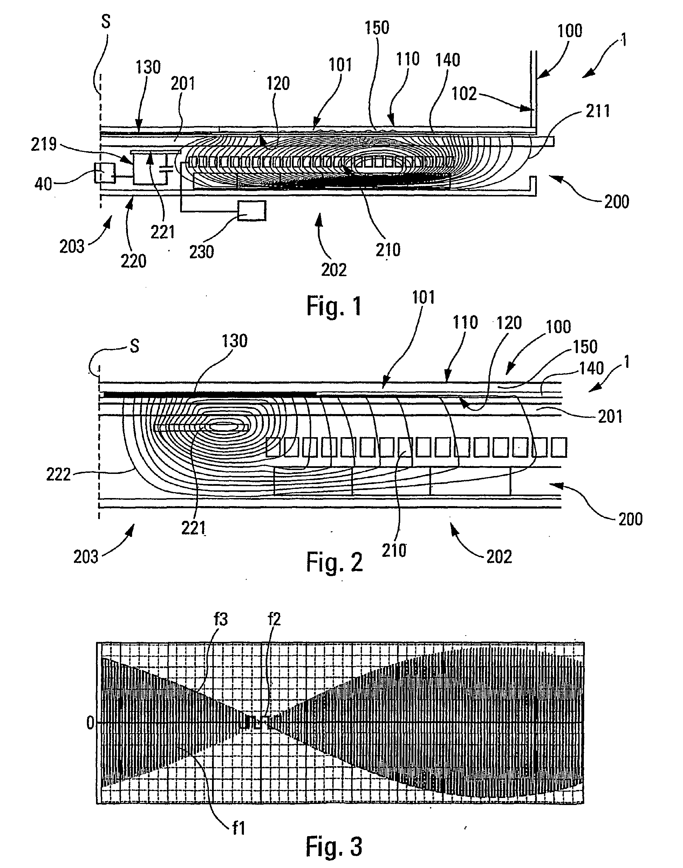

Comme on peut le voir aux figures 1 et 2, un système de cuisson 1 pour cuire des aliments comprend un article culinaire 100 adapté à recevoir des aliments ou un fluide de cuisson (eau, huile...), par exemple une poêle ou une casserole, et une plaque de cuisson 200 adaptée à supporter l'article culinaire 100 et à transmettre à ce dernier l'énergie nécessaire pour la cuisson de l'aliment qu'il contient.

Comme représenté sur les figures 1 et 2, l'article culinaire 100 comprend un corps de base 150, réalisé à partir d'un matériau de base conducteur thermique, par exemple de l'aluminium. Ce corps de base définit généralement la structure géométrique de l'article culinaire et peut servir de support à un éventuel revêtement intérieur et/ou extérieur (émail, peinture, revêtement Téflon...).

L'article culinaire 100 définit un volume de réception de l'aliment à cuire qui est délimité par un fond 101 et une paroi latérale 102. Le fond 101 de l'article culinaire 100, ici de forme circulaire, possède une face interne (ou face supérieure) 110 destinée à être en contact avec les aliments et une face externe (ou face inférieure) 120 destinée à être au contact avec la plaque de cuisson 200.

Au moins une partie d'au moins l'une des faces 110, 120 du fond 101 présente un aspect sensiblement plan, de sorte à assurer la stabilité de l'article culinaire 100 lorsque celui-ci est posé sur une surface horizontale (plaque de cuisson 200, table, etc.). Ici, les faces 110,120 du fond 101 sont entièrement planes et l'épaisseur du fond 101 est constante.

Ici, le fond 101 est formé principalement par le matériau du corps de base 150.

L'article culinaire 100 comprend des moyens thermosensibles 130 qui sont conducteurs d'électricité. Ces moyens thermosensibles sont destinés à permettre la détermination de la température de l'article culinaire 100. De préférence, le matériau choisi pour les moyens thermosensibles 130 présente une variabilité élevée de sa résistivité p sur une gamme de température donnée (de préférence de 20°C à 300°C), ce qui permet d'obtenir des mesures précises de température. Par ailleurs, afin de faciliter les calculs permettant la détermination de la température, il est préférable que la variation de résistivité p en fonction de la température (dans la gamme de température donnée) soit linéaire, et, afin d'obtenir une grande précision dans le mesure de la température, que le coefficient de température C_{T} soit élevé. Par ailleurs, de préférence et pour des raisons exposées ultérieurement, les moyens thermosensibles 130 sont des moyens non ferromagnétiques. Pour toutes ces raisons, dans le présent mode de réalisation, les moyens thermosensibles sont en titane.

Les moyens thermosensibles 130 sont intégrés dans le fond 101 de l'article culinaire 100. Dans le présent mode de réalisation, les moyens thermosensibles 130 ont une épaisseur constante. Ici, les moyens thermosensibles 130 sont formés par un élément thermosensible 130 (un insert intégré dans le corps de base 150). De préférence et pour des raisons exposées ultérieurement, les moyens thermosensibles 130 (ici, une face de l'insert 130) constituent une partie de la paroi extérieure 102 du fond 101 de l'article culinaire 100 (ici la partie centrale), comme représenté sur les figures 1 et 2.

Dans le présent mode de réalisation, les moyens thermosensibles 130 présentent une forme à symétrie de révolution dont l'axe S est perpendiculaire au plan du fond 101. En l'occurrence, l'insert 130 a l'aspect d'un disque qui est concentrique avec le fond 101 de l'article culinaire 100.

Par ailleurs, dans le présent mode de réalisation, comme illustré sur les figures 1 et 2, l'article culinaire 100 comprend également des moyens ferromagnétiques 140. Ces moyens ferromagnétiques 140 sont destinés à permettre le chauffage des aliments quand la plaque de cuisson 200 sur laquelle repose l'article culinaire 100 est une plaque à induction magnétique, et ils sont configurés pour transformer un champ magnétique incident (représenté à la figure 1 par des lignes de champ 211) provenant de la plaque de cuisson 200 en chaleur, par effet Joule (induit par des courants de Foucault).

Dans le présent mode de réalisation, les moyens ferromagnétiques 140 sont intégrés dans le fond 101 de l'article culinaire 100, et plus précisément dans le corps de base 150. Dans le présent mode de réalisation, les moyens ferromagnétiques 140 s'étendent selon une couronne 140. Ils peuvent se présenter, par exemple, sous forme d'une grille ou de capsules collées à chaud.

Selon l'invention, les moyens thermosensibles 130 et les moyens ferromagnétiques 140 sont agencés l'un par rapport à l'autre de sorte que la chaleur générée par les moyens ferromagnétiques 140 soit transmise par conduction - thermique aux moyens thermosensibles 130. Ici, la couronne 140 en matériau ferromagnétique est en contact avec l'insert circulaire 130 en matériau thermosensible qu'elle entoure.

Comme représenté sur les figures 1 et 2, la plaque de cuisson 200 comprend une surface de réception 201 adaptée à recevoir l'article culinaire 100 (plus précisément, la face inférieure 120 de son fond 101). La plaque de cuisson 200 comprend au moins un foyer (en l'occurrence, un seul).

La plaque de cuisson 200 comprend un système de chauffe 202 et un système de mesure de température 203.

Le système de chauffe 202 comprend des moyens de chauffe 210 et de moyens de régulation 230. A chaque foyer sont associés des moyens de chauffe 210 qui lui sont propres.

Les moyens de régulation 230, par exemple un microcontrôleur et son programme adapté, permettent, par exemple, la régulation des moyens de chauffe 210 autour d'un point de consigne, ou le déclenchement d'un minuteur, etc.

Dans le présent mode de réalisation, comme représenté aux figures 1 et 2, les moyens de chauffe 210 sont inductifs. A cet effet, ils comprennent un inducteur, en l'espèce une bobine inductive de chauffe 210. Chaque foyer comprend au moins une bobine inductive de chauffe 210 (en l'occurrence, une seule). Par ailleurs, la plaque de cuisson 200 comprend des premiers moyens de protection thermique qui permettent de protéger thermiquement les moyens de chauffe 210 quand ils sont inductifs.

Dans le présent mode de réalisation, le système de chauffe 202 est configuré pour que les moyens de chauffe 210 fournissent une chauffe séquencée dans le temps et passent successivement et alternativement dans un état de chauffage dans lequel ils génèrent et transmettent l'énergie de cuisson, et dans un état d'arrêt dans lequel ils ne génèrent plus cette énergie. En l'occurrence, les moyens de chauffe 210 étant inductifs, ils sont alimentés par un courant alternatif de fréquence f₁ modulé en amplitude par une fréquence f₃, le zéro (et la zone adjacente comme expliqué ci-après) de la modulation correspondant à l'état d'arrêt et le reste à l'état de chauffage. Une fréquence f₁ typique est par exemple de 18 à 25 kHz. Une modulation typique est de fréquence f₃ égale à 50 Hz ou 60 Hz (100 Hz ou 120 Hz après redressement).

Le système de mesure de température 203 comprend des moyens de mesure 220 et de moyens de contrôle 240.

Les moyens de mesure 220 comprennent un circuit électrique 219 ayant au moins un élément de nature inductive 221, indépendamment de la nature (inductive ou non) des moyens de chauffe 210. Dans le présent mode de réalisation, l'élément de nature inductive est un inducteur 221, en l'espèce, une bobine inductive de mesure 221. Comme on peut le voir aux figures 1 et 2, la bobine inductive de mesure 221 est disposée au centre de la bobine inductive de chauffe 210.

Le champ magnétique (représenté à la figure 2 par des lignes de champ 222) généré par la bobine inductive de mesure 221 est de bien plus faible amplitude que celui généré par la bobine inductive de mesure 210 et ne permet pas de chauffer un matériau ferromagnétique par induction.

La bobine inductive de mesure 221 permet de mesurer par induction l'intensité du courant circulant dans l'élément thermosensible 130 de l'article culinaire -100 lorsque celui-ci est positionné sur la surface de réception 201. En effet, la bobine inductive de mesure 221 est assimilable au circuit primaire d'un transformateur tandis que les moyens thermosensibles 130 de l'article culinaire 100 en sont le circuit secondaire.

Le principe de la mesure est basé sur la variation de l'impédance Z du circuit électrique 219 (en l'occurrence un circuit RLC comprenant la bobine inductive de mesure 221 et un condensateur de capacité C monté en série avec la bobine inductive de mesure 221) en fonction de la variation de la température des éléments thermosensibles 130. La bobine de mesure 221 se caractérise par une inductance L_{B} (dont la variation en fonction de la température est suffisamment faible pour être négligée) et une résistance R_{B}. La valeur de l'impédance Z du circuit électrique 119 (circuit primaire) est fonction de la résistance R_{B} de la bobine inductive de mesure 221 (dont la valeur est connue) et de la résistance R_{S} du circuit secondaire formé par le matériau thermosensible 130 (dont la valeur dépend de la température). Aux valeurs de la tension U appliquée au circuit électrique 119 et de l'impédance Z, correspond l'intensité I du courant circulant dans la bobine inductive de mesure 221, d'après le relation U=Z*I.

La mesure de l'intensité du courant I circulant dans la bobine inductive de mesure 221 permet de déterminer l'impédance Z du circuit électrique 119 et donc la résistance R de ce circuit 119, d'en déduire la résistance R_{S} des moyens thermosensibles 130 et donc leur résistivité p (les dimensions de ces moyens étant connues) et leur température.

Les moyens de contrôle 240 permettent de déterminer la température de l'article culinaire 100 à partir de la mesure de l'intensité I du courant circulant dans la bobine inductive de mesure 221, les moyens de mesure 220 transmettant vers les moyens de contrôle 240 un signal dont la valeur est représentative de l'impédance Z du circuit 119 (en l'espèce, l'intensité I du courant circulant dans la bobine inductive de mesure 221).

Les moyens de contrôle 240 comprennent au moins le modèle du comportement thermique de la résistivité p du matériau thermosensible 130 inséré dans le fond de l'article culinaire 100. Il est aisé de comprendre que l'utilisation de moyens thermosensibles 130 à coefficient de température C_{T} constant (réellement ou selon une approximation acceptable) dans la plage de températures d'utilisation de l'article culinaire 100 permet de faciliter grandement la détermination de la température à partir d'une valeur de la résistivité p, le modèle étant alors linéaire. Afin de réaliser cette détermination, les moyens de contrôle 240 comprennent avantageusement un microprocesseur.

Afin de faciliter la détermination de la température (plus précisément, afin de faciliter la corrélation entre la variation de la résistance R et de l'intensité I), il est avantageux que la bobine inductive de mesure 221 soit alimentée par une tension U (en l'occurrence, une tension créneau) dont la fréquence f₂ correspond à la fréquence de résonance fᵣ du circuit électrique 119 qui est égale à 1/(2Π√L_{B}.C) : à cette fréquence, l'impédance Z du circuit électrique 119 est égale à sa résistance R, et la tension U appliquée et l'intensité I dans ce circuit 119 sont proportionnels (U=R*I). Dans les faits, le condensateur C est choisi en fonction de la fréquence f₂ d'alimentation disponible et de l'inductance L_{B} de la bobine inductive de mesure 221. La bobine inductive de mesure 221 permet donc de mesurer une variation de résistance R qui peut être corrélée à une variation de température de l'article culinaire 100.

Par ailleurs, la résistance Rₛ des moyens thermosensibles 130 dépend entre autre de la profondeur de pénétration δ du champ magnétique créé par la bobine inductive de mesure 221, et cette profondeur de pénétration δ dépend à la fois de la résistivité p et de la perméabilité magnétique µᵣ des moyens thermosensibles 130, conformément à la formule δ = √(ρ/Π.µ₀.µᵣ.f), où µ₀ est la perméabilité magnétique du vide et f est la fréquence de la bobine inductive de mesure 221 (ici, f₂). Or, si ces deux propriétés δ et µᵣ varient en même temps, il est extrêmement difficile de relier la variation de la résistance R mesurée par la bobine inductive de mesure 221 (en fait l'intensité I) à la température de l'article culinaire 100. De ce fait, on comprend aisément qu'il est très avantageux que les moyens thermosensibles 130 soient non ferromagnétiques, la perméabilité magnétique µᵣ étant alors assimilable à 1 et ne dépendant pas de la température, contrairement à un matériau ferromagnétique.

Dans les faits, une fois la nature du matériau non ferromagnétique des moyens thermosensibles 130 déterminée, leur épaisseur E est choisie en fonction de la fréquence f₂ de la tension U d'alimentation de la bobine inductive de mesure 221 de façon à être supérieure à la profondeur de pénétration δ associée à cette fréquence f₂. Réciproquement, la fréquence f₂ de la tension U d'alimentation de la bobine inductive de mesure 221 peut être déterminée en fonction de l'épaisseur E des moyens thermosensibles 130 et de la profondeur de pénétration δ désirée. Dans le présent mode de réalisation, les moyens thermosensibles 130 non ferromagnétiques en titane ont une épaisseur de 1,2 mm pour une fréquence f₂ de 50kHz.

Un autre avantage d'employer comme moyen thermosensible 130 un matériau non ferromagnétique est que, dans ce cas, l'inductance L_{B} (connue) de la bobine inductive de mesure 221 varie peu en sa présence.

Ainsi, dans ce cas particulier, le seul élément variable en fonction de la température dans l'impédance Z du circuit 119 est la résistivité p des moyens thermosensibles 130 (et donc, la seule propriété des moyens thermosensibles 130 à intervenir dans la mesure de la température quand ils sont réalisés dans un matériau non ferromagnétique est la variation de leur résistivité p), ce qui permet d'obtenir facilement une mesure précise. Afin d'améliorer la mesure, les moyens thermosensibles 130 sont avantageusement positionnés en vis-à-vis de la bobine inductive de mesure 221. En outre, la surface des moyens thermosensibles 130 est de préférence supérieure à celle de la bobine inductive de mesure 221, ce qui augmente la fiabilité de la mesure.

Ainsi, la mesure de température de l'article culinaire 100 se fait de façon indépendante de la chauffe de cet article, et peut avoir lieu dès qu'il est posé sur la plaque de cuisson 200, en dehors de toute activation des moyens de chauffe 210, et indépendamment de la taille de l'article culinaire 100.

Par ailleurs, dans le présent mode de réalisation, la plaque de cuisson 200 comprend des seconds moyens de protection thermique qui permettent de protéger thermiquement les moyens de mesure 220. Ces seconds moyens de protection thermique peuvent être soit spécifiques, soit constitués par les premiers moyens de protection thermique.

Dans le présent mode de réalisation, comme les moyens de chauffe 210 sont inductifs, afin de ne pas perturber la mesure de la température de l'article culinaire, celle-ci se fait de préférence aux environs du passage à zéro de la modulation du courant d'alimentation' des moyens de chauffe 210, de sorte à éviter des phénomènes d'induction entre les moyens inductifs de chauffe 210 et les moyens inductifs de mesure 220, même si les fréquences f₁, f₂ respectives sont de préférence sensiblement différentes (les fréquences peuvent être différentes ou non).

A cet effet, et afin de ne pas être abîmée, la bobine inductive de mesure 221 en fonctionnement, passe successivement et alternativement en mode d'arrêt dans lequel elle est alimentée par une tension nulle (circuit ouvert), et en mode d'induction dans lequel elle est alimentée par la tension créneau U de fréquence f₂). La figure 3 représente, pour une même unité de temps arbitraire, l'évolution de la tension aux bornes de la bobine inductive de mesure 221 selon une fréquence f₂ et l'évolution du courant modulé dans la bobine inductive de chauffe 210 selon une fréquence f₁ modulé par une fréquence f₃.

Cette figure, schématique et simulée, illustre principalement les différences entre les fréquences f₁,f₂ des bobines inductives de chauffe 210 et de mesure 221, et le fait que la bobine inductive de mesure 221 n'est alimentée qu'aux environs du passage à zéro de la modulation du courant de la bobine inductive de chauffe 210.

Dans le présent mode de réalisation, contrairement à la figure 3 représentant le principe du fonctionnement, aux environs du passage à zéro de la modulation, quand la tension de l'onduleur générant la fréquence f₃ de modulation descend sous une certaine limite (par exemple 30-40V), ce dernier (par construction) s'arrête (les arches de la modulation ne sont pas aussi régulières que sur la figure 3). De ce fait il existe un temps (une à deux millisecondes pour une modulation à 50 Hz) autour du passage au zéro théorique de la modulation où le champ de la bobine inductive de chauffe 210 est nul et donc où les moyens de chauffe 210 sont dans leur état d'arrêt. Ce temps est suffisant pour effectuer la mesure.

Dans le mode de réalisation préféré, la plaque de cuisson 200 comprend des moyens complémentaires de mesure (non représentés) adaptés à mesurer la température de la surface de réception 201, par exemple des moyens de type CTN (moyens dont la résistivité électrique est fonction d'un Coefficient de Température Négatif). Ces moyens complémentaires de mesure (classiquement utilisés dans les plaques de cuisson 200) sont reliés au système de mesure de température 203 (et plus particulièrement aux moyens de contrôle 240) et permettent de corréler la mesure effectuée par la bobine inductive de mesure 221 à la mesure qu'ils effectuent et d'étalonner le système de mesure de température 203. Cette comparaison des températures peut n'avoir lieu qu'au début de la mise en chauffe de l'article culinaire 100 ou à tout moment pendant cette chauffe.

La détection d'une température par la bobine inductive de mesure 220 et/ou par les moyens complémentaires de mesure permet également de déterminer l'atteinte d'une température cible maximale générant un arrêt de chauffe et protégeant ainsi l'article culinaire 100.

En utilisation, dans le présent mode de réalisation, l'article culinaire 100 est positionné sur la plaque de cuisson 200 à induction. Suite à l'activation des moyens de chauffe 210, par exemple par sélection d'une fonction ou d'un programme (mijotage, bouillir eau, cuisson à l'huile, cuisson sans matière grasses, etc.), la bobine inductive de chauffe 210 produit un champ magnétique qui induit des courants dans les moyens ferromagnétiques 140 du fond 101 de l'article culinaire 100, ce qui, par effet Joule, échauffe ces moyens ferromagnétiques 140 et, par conduction thermique, le reste de l'article culinaire 100, dont l'insert thermosensible 130.

Avec la variation de température, la résistivité p et la résistance Rₛ des moyens thermosensibles 130 changent, ainsi que la résistance R et l'impédance Z du circuit électrique 119. Du fait de l'utilisation d'un matériau non ferromagnétique comme moyen thermosensible 130 et de l'alimentation de la bobine inductive de mesure 221 par une tension U dont la fréquence f₂ correspond à la fréquence de résonance fᵣ du circuit électrique 119, l'intensité I envoyée par les moyens de mesure 220 aux moyens de contrôle 240 permet à ces derniers de déterminer aisément la température de l'article culinaire 100 à partir de cette intensité I.

Par ailleurs, le système de mesure de température 203 peut être également utilisé pour d'autres fonctions comme la détection de la présence d'un article culinaire 10 sur la plaque de cuisson 200, voire son centrage, ou la reconnaissance du type d'article culinaire 100 ou de sa compatibilité avec la plaque de cuisson 200, combiné par exemple à la génération d'un signal d'erreur ou d'inhibition des moyens de chauffe. En effet, la présence d'un matériau métallique à proximité des moyens de mesure 220 modifie l'impédance du circuit 119, et cette modification est traduite par les moyens de contrôle 240 sans nécessairement convertir cette modification d'impédance en température.

La présente invention n'est pas limitée au présent mode de réalisation.

Concernant le fond de l'article culinaire, il est possible que ses faces présentent une légère concavité, que son épaisseur ne soit pas constante, que sa forme ait un aspect autre que circulaire, par exemple un aspect ovale ou rectangulaire (carré).

Concernant le matériau utilisé pour la réalisation des moyens thermosensibles, il est possible d'utiliser des métaux tels que titane, bismuth, molybdène (notamment di silicium de molybdène MoSi2), platine, cuivre, aluminium, magnésium, zinc ou nickel, ou des alliages de ces métaux ou encore des céramiques métalliques, de l'inox austénitique ou des émaux non ferreux.

Concernant les moyens thermosensibles, ils peuvent avoir une autre forme qu'un disque, par exemple former un ensemble comprenant au moins une couronne ou une somme de couronnes concentriques avec le centre du fond de l'article culinaire et de préférence reliées thermiquement entre elles. Ils peuvent présenter un relief ou des découpes (de préférence, les découpes sont situées dans le plan du fond de l'article culinaire). Ils peuvent également, au moins en partie, être recouvert d'un matériau transparent à un champ magnétique, tel qu'un émail ou une peinture, qui forme une partie au moins de la face inférieure du fond de l'article culinaire ce qui permet à l'article culinaire de pouvoir être facilement nettoyé sans risque de détérioration des moyens thermosensibles.

Les moyens thermosensibles peuvent ne pas former un insert, mais être déposés sous forme de couche(s), par exemple par sérigraphie ou projection thermique. Ils peuvent également être formés par plusieurs matériaux non ferromagnétiques superposés, par exemple colaminés ou déposés en couches.

Concernant les moyens ferromagnétiques, ils peuvent être à distance des moyens thermosensibles, tant que les moyens thermosensibles ne sont pas isolés thermiquement.

Concernant la plaque de cuisson, celle-ci pourrait comprendre plusieurs foyers, dont chaque est respectivement équipé d'une bobine de mesure. Dans ce cas, la plaque de cuisson peut ne comporter qu'un seul système de mesure pour tous les foyers, connecté par multiplexage aux différentes bobines de mesure des foyers.

Concernant les moyens de contrôle, ceux-ci peuvent comprendre plusieurs modèles de comportement thermique, chaque modèle correspondant à un matériau thermosensible donné, de sorte à augmenter la flexibilité d'utilisation de la plaque de cuisson. De plus, un modèle de comportement thermique peut comprendre plusieurs schémas de comportement thermique pour une pluralité de fréquences de mesure, ce qui permet alors de reconnaître le matériau thermosensible de l'article culinaire. En outre, Les moyens de contrôle pourraient être couplés avec les moyens de régulation, par exemple sous forme de circuit électronique, ou intégrés ensemble dans un microprocesseur.

Concernant le système de mesure, la tension d'alimentation des moyens de mesure peut être sous forme d'une excitation multifréquences, ou sous forme d'impulsion (s) de Dirac.

Afin d'avoir une mesure de la température aux environs d'au moins un passage à zéro de la modulation du courant, notamment si le temps de la détermination de la température est relativement long, il est possible d'effectuer une mesure tous les N passages à zéro de la modulation, avec N entier naturel (par exemple toutes les cinq ou dix secondes avec une modulation à 50 Hz) et d'arrêter l'onduleur pendant une arche (une demi période) de façon à avoir un courant nul dans la bobine inductive de chauffe sans perturber la chauffe de l'article.

## Revendications

1. Utilisation de moyens thermosensibles (130) pour la mesure, par une plaque munie de moyens de chauffe non inductifs, de la température d'un article culinaire (100) sans bobine comprenant un fond (101) dans lequel sont disposés lesdits moyens thermosensibles (130) réalisés dans des matériaux conducteurs d'électricité, non ferromagnétiques et à résistivité (p) variable avec la température.

2. Utilisation de moyens thermosensibles (130) pour la mesure, par une plaque munie de moyens de mesure distincts de moyens de chauffe, de la température d'un article culinaire (100) sans bobine comprenant un fond (101) dans lequel sont disposés lesdits moyens thermosensibles (130) réalisés dans des matériaux conducteurs d'électricité, non ferromagnétiques et à résistivité (p) variable avec la température

3. Utilisation de moyens thermosensibles (130) pour la mesure de température d'un article culinaire (100) selon l'une quelconque des revendications précédentes, dans laquelle la variation de la résistivité (p) avec la température des moyens thermosensibles (130) est utilisée pour la mesure de température dudit article culinaire (100).

4. Utilisation de moyens thermosensibles (130) pour la mesure de température d'un article culinaire (100) selon l'une quelconque des revendications précédentes, **caractérisée en ce que** les moyens thermosensibles (130) sont réalisés dans des matériaux dont la résistivité (p) varie linéairement avec la température dans la plage de température comprise entre 20 et 300°C.

5. Utilisation de moyens thermosensibles (130) pour la mesure de température d'un article culinaire (100) selon l'une quelconque des revendications précédentes, **caractérisée en ce que** les moyens thermosensibles (130) sont réalisés à partir d'un métal parmi le titane, le platine, le cuivre, l'aluminium, le magnésium, le zinc, le bismuth, le molybdène, et le nickel, ou à partir d'un alliage de ces métaux, ou à partir d'une céramique métallique, d'un inox austénitique ou d'émaux non ferreux.

6. Utilisation de moyens thermosensibles (130) pour la mesure de température d'un article culinaire (100) selon l'une quelconque des revendications précédentes, **caractérisée en ce que** les moyens thermosensibles (130) sont disposés dans la partie centrale du fond (101).

7. Utilisation de moyens thermosensibles (130) pour la mesure de température d'un article culinaire (100) selon l'une quelconque des revendications précédentes, **caractérisée en ce que** les moyens thermosensibles (130) se présentent sous la forme d'un insert inséré dans le fond (101).

8. Utilisation de moyens thermosensibles (130) pour la mesure de température d'un article culinaire (100) selon l'une quelconque des revendications précédentes, **caractérisée en ce que** les moyens thermosensibles (130) se présentent sous la forme d'au moins une couche de matériau(x) thermosensible(s) déposée sur le fond (101).

9. Utilisation de moyens thermosensibles (130) pour la mesure de température d'un article culinaire (100) selon l'une quelconque des revendications précédentes, **caractérisée en ce que** les moyens thermosensibles (130) se présentent sous la forme d'un colaminage.

10. Utilisation de moyens thermosensibles (130) pour la mesure de température d'un article culinaire (100) selon l'une quelconque des revendications précédentes, **caractérisée en ce qu'**une partie au moins des moyens thermosensibles (130) constitue au moins une partie d'une face (110,120) du fond (101).

11. Utilisation de moyens thermosensibles (130) pour la mesure de température d'un article culinaire (100) selon l'une quelconque des revendications précédentes, **caractérisée en ce qu'**une partie au moins des moyens thermosensibles (130) est recouverte d'un matériau qui est transparent à un champ magnétique et qui constitue au moins une partie d'une face (110,120) du fond (101).

12. Utilisation de moyens thermosensibles (130) pour la mesure de température d'un article culinaire (100) selon l'une quelconque des revendications 2 à 11, **caractérisée en ce que** des moyens ferromagnétiques (140) sont intégrés dans le fond (101) et sont agencés par rapport aux moyens thermosensibles (130) de façon à transmettre à ces derniers la chaleur qu'ils produisent sous l'effet d'un champ magnétique d'induction.

13. Utilisation de moyens thermosensibles (130) pour la mesure de température d'un article culinaire (100) selon la revendication 12, **caractérisée en ce** les moyens ferromagnétiques (140) sont distants des moyens thermosensibles (130).

## Claims

1. Use of heat-sensitive means (130) for measuring, by means of a hob provided with non-inductive heating means, the temperature of a culinary article (100) without a coil comprising a plate (101) in which said heat-sensitive means (130) are arranged which are made from non-ferromagnetic, electricity-conducting materials, with a resistance (p) that varies according to the temperature.

2. Use of heat-sensitive means (130) for measuring, by means of a hob provided with measuring means that are distinct from the heating means, the temperature of a culinary article (100) without a coil comprising a plate (101) in which said heat-sensitive means (130) are arranged which are made from non-ferromagnetic, electricity-conducting materials, with a resistance (p) that varies according to the temperature.

3. Use of heat-sensitive means (130) for measuring the temperature of a culinary article (100) according to any one of the preceding claims, in which the variation in resistance (p) according to the temperature of the heat-sensitive means (130) is used for measuring the temperature of said culinary article (100).

4. Use of heat-sensitive means (130) for measuring the temperature of a culinary article (100) according to any one of the preceding claims, **characterised in that** the heat-sensitive means (130) are made from materials for which the resistance (p) varies linearly according to the temperature in the temperature range of between 20 and 300°C.

5. Use of heat-sensitive means (130) for measuring the temperature of a culinary article (100) according to any one of the preceding claims, **characterised in that** the heat-sensitive means (130) are made from a metal including titanium, platinum, copper, aluminium, magnesium, zinc, bismuth, molybdenum and nickel or from an alloy of these metals, or from a metallic ceramic, an austenitic stainless steel or non-ferrous enamels.

6. Use of heat-sensitive means (130) for measuring the temperature of a culinary article (100) according to any one of the preceding claims, **characterised in that** the heat-sensitive means (130) are arranged in the central part of the plate (101).

7. Use of heat-sensitive means (130) for measuring the temperature of a culinary article (100) according to any one of the preceding claims, **characterised in that** the heat-sensitive means (130) are in the form of an insert inserted into the plate (101).

8. Use of heat-sensitive means (130) for measuring the temperature of a culinary article (100) according to any one of the preceding claims, **characterised in that** the heat-sensitive means (130) are in the form of at least one layer of heat-sensitive material(s) arranged on the plate (101).

9. Use of heat-sensitive means (130) for measuring the temperature of a culinary article (100) according to any one of the preceding claims, **characterised in that** the heat-sensitive means (130) are in the form of a colamination.

10. Use of heat-sensitive means (130) for measuring the temperature of a culinary article (100) according to any one of the preceding claims, **characterised in that** at least one portion of the heat-sensitive means (130) forms at least one portion of a face (110, 120) of the plate (101).

11. Use of heat-sensitive means (130) for measuring the temperature of a culinary article (100) according to any one of the preceding claims, **characterised in that** at least one portion of the heat-sensitive means (130) is covered by a material which is transparent to a magnetic field and which forms at least one portion of a face (110, 120) of the plate (101).

12. Use of heat-sensitive means (130) for measuring the temperature of a culinary article (100) according to any one of claims 2 to 11, **characterised in that** ferromagnetic means (140) are integrated into the plate (101) and are arranged in relation to the heat-sensitive means (130) so as to transmit to the latter the heat that they produce under the effect of an induction magnetic field.

13. Use of heat-sensitive means (130) for measuring the temperature of a culinary article (100) according to claim 12, **characterised in that** the ferromagnetic means (140) are spaced apart from the heat-sensitive means (130).

## Patentansprüche

1. Verwendung einer wärmeempfindlichen Einrichtung (130) für die Messung, durch eine mit nicht induktiven Heizmitteln versehene Platte, der Temperatur eines Kochartikels (100) ohne Spule, mit einem Boden (101), in welchem die wärmeempfindliche Einrichtung (130) angeordnet ist, die mit leitfähigen, nicht ferromagnetischen Materialien ausgeführt ist und einem mit der Temperatur variablen elektrischen Widerstand (p) hat.

2. Verwendung einer wärmeempfindlichen Einrichtung (130) zur Messung, durch eine mit von den Heizmitteln unterschiedlichen Messmitteln versehene Platte, der Temperatur eines Kochartikels (100) ohne Spule, mit einem Boden (101), in welchem die wärmeempfindlichen Mittel (130) angeordnet sind, ausgeführt in elektrisch leitfähigen, nicht ferromagnetischen Materialien und mit einem mit der Temperatur variablen elektrischen Widerstand (p).

3. Verwendung einer wärmeempfindlichen Einrichtung (130) zur Messung der Temperatur eines Kochartikels (100) nach einem der vorhergehenden Ansprüche, in welcher die Variation des Widerstand (p) mit der Temperatur der wärmeempfindlichen Einrichtung (130) genutzt wird für die Messung der Temperatur des Kochartikels (100).

4. Verwendung der wärmeempfindlichen Einrichtung (130) für die Messung der Temperatur eines Kochartikels (100) nach einem der vorhergehenden Ansprüche, **dadurch gekennzeichnet, dass** die wärmeempfindliche Einrichtung (130) ausgeführt ist in Materialien, deren Widerstandsfähigkeit (p) mit der Temperatur im Temperaturbereich zwischen 20 und 300°C linear variiert.

5. Verwendung einer wärmeempfindlichen Einrichtung (130) für die Messung der Temperatur eines Kochartikels (100) nach einem der vorhergehenden Ansprüche, **dadurch gekennzeichnet, dass** die wärmeempfindliche Einrichtung (130) aus einem Metall aus der Gruppe Titan, Platin, Kupfer, Aluminium, Magnesium, Zink, Wismut, Molybdän und Nickel, oder aus einer Legierung dieser Metalle oder aus einem Keramikmetall, einem austenitischen Inox oder nicht eisenhaltigen Emaillen hergestellt sind.

6. Verwendung einer wärmeempfindlichen Einrichtung (130) für die Messung der Temperatur eines Kochartikels (100) nach einem der vorhergehenden Ansprüche, **dadurch gekennzeichnet, dass** die wärmeempfindliche Einrichtung (130) in dem zentralen Bereich des Bodens (101) angeordnet ist.

7. Verwendung einer wärmeempfindlichen Einrichtung (130) für die Messung der Temperatur eines Kochartikels (100) nach einem der vorhergehenden Ansprüche, **dadurch gekennzeichnet, dass** die wärmeempimdliche Einrichtung (130) in Form eines in den Boden (101) eingefügten Einsatzes vorliegt.

8. Verwendung einer wärmeempfindlichen Einrichtung (130) für die Messung der Temperatur eines Kochartikels (100) nach einem der vorhergehenden Ansprüche, **dadurch gekennzeichnet, dass** die wärmeempfindliche Einrichtung (130) in Form wenigstens einer Schicht aus ein oder mehreren wärmeempfindlichen Materialien vorliegt, die auf dem Boden (101) aufgebracht ist.

9. Verwendung einer wärmeempfindlichen Einrichtung (130) für die Messung der Temperatur eines Kochartikels (100) nach einem der vorhergehenden Ansprüche, **dadurch gekennzeichnet, dass** die wärmeempfindliche Einrichtung (130) in Form einer Colaminierung vorliegt.

10. Verwendung einer wärmeempfindlichen Einrichtung (130) für die Messung der Temperatur eines Kochartikels (100) nach einem der vorhergehenden Ansprüche, **dadurch gekennzeichnet, dass** wenigstens ein Bereich der wärmeempfindlichen Einrichtung (130) wenigstens einen Teil einer Fläche (110, 120) des Bodens (101) bildet.

11. Verwendung einer wärmeempfindlichen Einrichtung (130) zur Messung der Temperatur eines Kochartikels (100) nach einem der vorhergehenden Ansprüche, **dadurch gekennzeichnet, dass** wenigstens ein Bereich der wärmeempfindlichen Einrichtung (130) von einem Material überdeckt ist, das für cin Magnetfeld durchlässig ist und das wenigstens einen Teil einer Fläche (110, 120) des Bodens (101) bildet.

12. Verwendung einer wärmeempfindlichen Einrichtung (130) für die Messung der Temperatur eines Kochartikels (100) nach einem der vorhergehenden Ansprüche 2 bis 11, **dadurch gekennzeichnet, dass** ferromagnetische Mittel (140) in den Boden (101) integriert sind und in Bezug zu der wärmeempfindlichen Einrichtung (130) so angeordnet sind, dass sie an die letzteren die Wärme übertragen, die sie unter Bewirkung eines magnetischen Induktionsfeldes erzeugen.

13. Verwendung einer wärmeempfindlichen Einrichtung (130) für die Messung der Temperatur eines Kochartikels (100) nach Anspruch 12, **dadurch gekennzeichnet, dass** die ferromagnetischen Mittel (140) von der wärmeempfindlichen Einrichtung (130) entfernt sind.
